# EUROPÄISCHE PATENTSCHRIFT

(11) **EP 0 817 987 B1**
(45) Veröffentlichungstag und Bekanntmachung des Hinweises auf die Patenterteilung: **04.10.2000**
(21) Anmeldenummer: 96911949.4
(22) Anmeldetag: 27.03.1996
(51) Int. Cl.: G02C 5/22

(54) **FEDERSCHARNIER FÜR BRILLEN**
SPRING HINGE FOR SPECTACLES
CHARNIERE A RESSORT POUR LUNETTES

(30) Priorität: 28.03.1995 DE 19511167
(43) Veröffentlichungstag der Anmeldung: 14.01.1998
(73) Patentinhaber: OBE Ohnmacht & Baumgärtner GmbH & Co. KG, 75228 Ispringen (DE)
(72) Erfinder: LEHNERT, Otto, D-74889 Sinsheim (DE); WAGNER, Reiner, D-75288 Ispringen (DE); SCHUCHARD, Klaus, D-75305 Neuenbürg (DE)
(74) Vertreter: Gleiss & Grosse
(86) Internationale Anmeldenummer: EP9601339
(87) Internationale Veröffentlichungsnummer: WO9630800

(56) Entgegenhaltungen:
- EP-A- 0 395 939
- DE-A- 4 332 971
- DE-U- 9 114 917
- DE-U- 9 301 985
- FR-A- 2 664 990
- US-A- 4 991 258
- US-A- 5 028 367
- PATENT ABSTRACTS OF JAPAN vol. 95, no. 004 & JP,A,07 090318 (KAWASAKI STEEL CORP), 4.April 1995,

## Beschreibung

Die Erfindung betrifft ein Federscharnier für Brillen mit einem Mittelteil und zwei mit diesem gelenkig verbundene Bügel. Derartige Federscharniere weisen ein dem Brillenbügel zugeordnetes Federgehäuse und ein mit dem Federgehäuse zusammenwirkendes Scharnierteil auf, an dem das Brillenteil befestigbar ist.

Federscharniere der hier angesprochenen Art zeichnen sich dadurch aus, daß der Bügel über die normale Tragestellung hinaus verschwenkt werden kann, im übrigen beim Tragen der Brille gegen den Kopf des Trägers angedrückt wird.

Aus der EP 90 107 388 sind Federscharniere für Brillen bekannt, welche das Öffnen des Brillenbügels über die normale Tragestellung hinaus erlauben. In einem derartigen Federscharnier ist ein Sperrkörper vorgesehen, der einen U-förmigen Querschnitt aufweist und mit mindestens einem federnden Schenkel versehen ist. Der Sperrkörper wird in eine Ausnehmung des Federgehäuses des Federscharniers eingeschoben, wobei ein freies Ende des U-förmigen Sperrkörpers in einer Verriegelungsausnehmung einrastet, die in die Wandung der Ausnehmung eingebracht ist.

Des weiteren ist aus der GB-2,248,121 A ein Federscharnier für Brillen bekannt, bei welchem ein zylinderförmiger Sperrkörper mit einem umlaufenden Absatz vorgesehen ist, wobei der Sperrkörper durch eine Schlitzung diametral geteilt ist. Der Absatz des Sperrkörpers greift auch hier in eine Verriegelungsausnehmung ein, die in der Wandung der Ausnehmung des Federgehäuses eingebracht ist. Nachteilig bei einer derartigen Ausbildung des Federscharniers ist, daß die Sperrwirkung durch den Sperrkörper nur aufgrund einer von dem Sperrkörper aufgebrachten Federkraft erzielbar ist.

Ein Federscharnier für Brillen gemäß Oberbegriff des Anspruchs 1 ist aus G 91 14 917.7 bekannt. Es ist mit einem Sperrkörper versehen ist, der in eine Ausnehmung des Federgehäuses eingebracht wird. Der Sperrkörper wird in der Ausnehmung dadurch verriegelnd gehalten, daß das Gehäuse im Bereich des Sperrkörpers verformt wird, nämlich mit einer Sicke ausgestattet wird, die in das Innere der Ausnehmung hineinragt und den Sperrkörper festhält.

Ein Nachteil dieses Federscharniers liegt darin, daß die Herstellung des Gehäuses sehr aufwendig und damit kostenintensiv ist. Das Gehäuse wird durch ein spanabtragendes Verfahren mit einer Ausnehmung versehen, in die unter anderem der Sperrkörper eingesetzt wird. Die Ausnehmung muß sehr präzise gefertigt sein, weil in deren Innerem bewegliche Teile gleitend untergebracht sind. Wird die Bewegung dieser Teile durch ungenaue Fertigung behindert, so ergibt sich damit eine Funktionsstörung des Federscharniers.

Ein nichtspanendes Herstellungsverfahren ist beispielsweise in der DE 43 32 971 offenbart. Dort wird ein sogenanntes PIM-Verfahren (Powder-Injection-Molding) beschrieben.

Es ist daher Aufgabe der Erfindung, ein einfach aufgebautes und kostengünstig herstellbares Federscharnier zu schaffen, bei dem die hier genannten Nachteile vermieden werden.

Diese Aufgabe wird durch ein Federscharnier gemäß Anspruch 1 und ein Verfahren zu dessen Herstellung gemäß Anspruch 12 gelöst.

Weitere Ausgestaltungen des Federscharniers ergeben sich aus den übrigen Unteransprüchen.

Die Erfindung wird im folgenden anhand der Zeichnung näher erläutert. Es zeigen:
- Figur 1: ein erfindungsgemäßes Federscharnier teilweise im Längsschnitt;
- Figur 2: ein Federscharnier gemäß Figur 1 mit einem angebrachten Bügel;
- Figur 3: eine Draufsicht auf das Federscharnier gemäß Figur 3,
- Figur 4: ein Federscharnier in einer ersten Funktionsstellung und
- Figur 5: ein Federscharnier in einer zweiten Funktionsstellung.

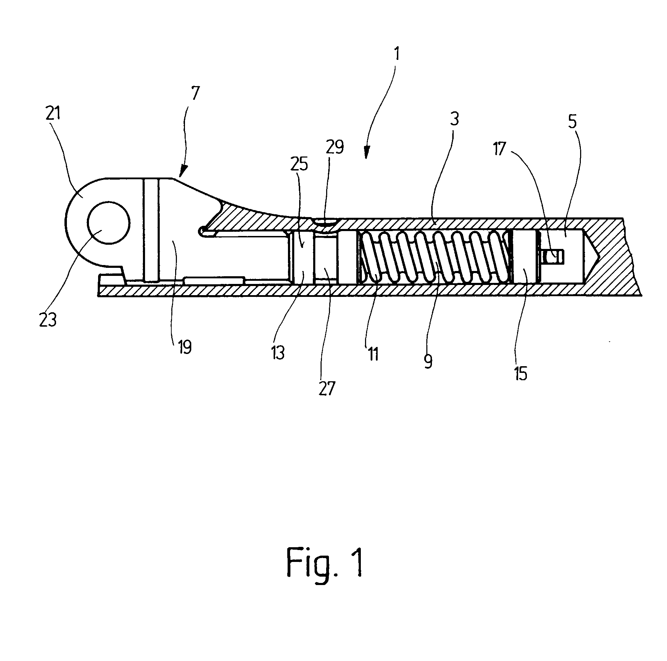

Das in Figur 1 dargestellte Federscharnier 1 weist ein Federgehäuse 3 auf, das im Längsschnitt dargestellt ist. Das Federgehäuse 3 ist einem hier nicht dargestellten Brillenbügel zugeordnet. Es weist in seinem Inneren eine Ausnehmung 5 auf, die sich in Längsrichtung des Federgehäuses 3 erstreckt. Die Kontur der Ausnehmung 5 ist vorzugsweise kreiszylindrisch. In die Ausnehmung ist ein Schieberteil 7 zumindest teilweise eingesteckt. Das Schieberteil 7 umfaßt einen Federführungsbolzen 9, der mit einem elastischen Element zusammenwirkt, das als Druckfeder, hier als Schraubenfeder 11 ausgebildet ist. Die Schraubenfeder stützt sich einerseits an einem als Sperrkörper dienenden Sperr-Ring 13 und andererseits an einem Stützring 15 ab, der auf geeignete Weise, beispielsweise durch eine mittels eines Prägevorgangs hergestellte Verbreiterung 17, sicher am Federführungsbolzen 9 befestigt ist. Die Schraubenfeder 11 steht unter einer Vorspannung.

Der Innendurchmesser des Sperr-Rings ist so gewählt, daß der Federführungsbolzen 9 durch den Sperr-Ring 13 hindurchgeführt werden kann, wobei der Sperr-Ring auch als Führungselement für den Federführungsbolzen 9 dient. Der Außendurchmesser des Stützrings 15 ist so auf die Abmessung der Ausnehmung 5 abgestimmt, daß der Stützring reibungsarm im Inneren der Ausnehmung in deren Längsrichtung verschiebbar ist. Die Innenfläche der Ausnehmung ist sehr glatt und maßgenau ausgebildet.

Der Federführungsbolzen 9 geht von dem Grundkörper 19 des Schieberteils 7 aus. Dieser setzt sich in einem Bügelscharnier 21 fort, das mit einer Durchgangsöffnung 23 versehen ist.

Der Sperr-Ring 13 weist eine in seine Umfangsfläche 25 eingebrachte Ringnut 27 auf. Das Federgehäuse 3 ist im Bereich der Ringnut 27 verformt und zwar mit einer Sicke 29 versehen, das heißt, die Wandung des Federgehäuses 3 ist nach Innen in Richtung der Ausnehmung 5 verformt und in die Ringnut 27 hineingedrückt. Auf diese Weise wird der als Sperrkörper wirkende Sperr-Ring 13 so festgehalten, daß eine Verlagerung in axialer Richtung der Ausnehmung 5 verhindert ist. Dabei kann das Schieberteil 7 gegen die Kraft der Schraubenfeder 11 nach links verlagert werden, wobei die vorgespannte Schraubenfeder 11 einer weiteren Kompression unterworfen wird und das Schieberteil 7 in seine in Figur 1 dargestellte Ausgangslage zurückdrängt.

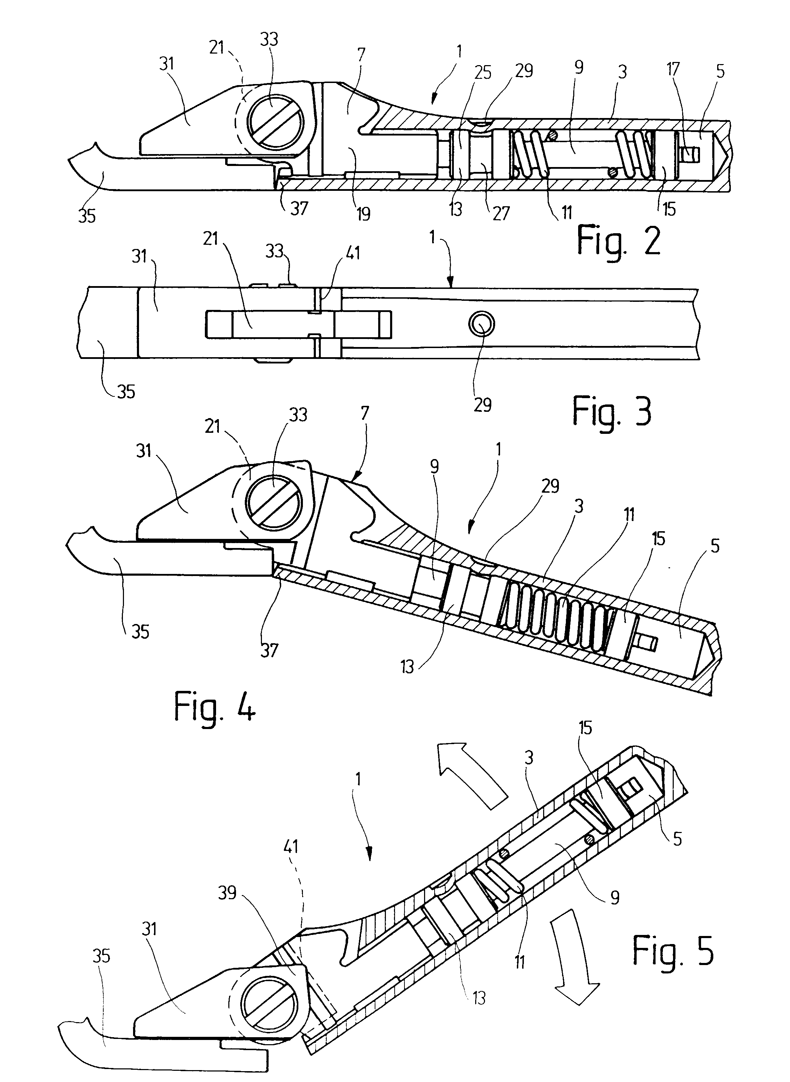

Figur 2 zeigt das in Figur 1 dargestellte Federscharnier 1. Gleiche Teile sind mit gleichen Bezugsziffern versehen, so daß auf deren Beschreibung hier verzichtet werden kann.

Durch die Darstellung in Figur 2 wird deutlich, daß an dem Bügelscharnier 21 ein Mittelteil-Scharnier 31 mittels einer Schraube 33 befestigbar ist, die die Durchgangsöffnung 23 durchdringt. Das Mittelteil 35 der Brille ist hier nur angedeutet.

Bei der Darstellung gemäß Figur 2 befindet sich der Bügel und damit das daran befestigte Federscharnier 1 in der Trageposition. Das Mittelteil stößt dabei gegen die Stirnseite 37 des Federscharniers 1. Das Mittelteil-Scharnier 31 ist so ausgebildet, daß in der Trageposition das Schieberteil 7 gegenüber der Grundposition in Figur 1 etwas nach links verlagert ist: Der Federführungsbolzen 9 ist etwas aus der Ausnehmung 5 herausgezogen, so daß die Schraubenfeder 11 eine zusätzliche Kompression erfährt. Die Schraubenfeder 11 stützt sich einerseits an dem als Sperr-Ring 13 ausgebildeten Sperrkörper ab, der im Inneren der Ausnehmung durch die Sicke 29 festgelegt ist, anderseits gegen den Stützring 15, der im Inneren der Ausnehmung 5 verlagerbar ist. Auf den Stützring wirkt also eine nach rechts wirkende Kraft, so daß der Federführungsbolzen 9 ebenfalls mit einer nach rechts wirkenden Kraft beaufschlagt wird, die den Federführungsbolzen 9 in die in Figur 1 dargestellte Position zurückdrängt.

Figur 3 zeigt das mit einem Mittelteil 35 versehene Federgehäuse 1 in Draufsicht, wobei die dem Kopf des Trägers der Brille zugewandte Seite des Federscharniers 1 sichtbar ist. Deutlich wird erkennbar, daß das Bügelscharnier 21 hier ein Scharnierauge aufweist, während das Mittelteil-Scharnier 31 mit zwei Scharnieraugen versehen ist, deren Abstand so gewählt ist, daß das Scharnierauge des Bügelscharniers 21 zwischen den beiden Scharnieraugen des Mittelteil-Scharniers angeordnet ist. Die Schraube 33 durchdringt alle Scharnieraugen und verbindet damit das Bügelscharnier 21 gelenkig mit dem Mittelteil-Scharnier 31.

In der Draufsicht wird auch die Sicke 29 deutlich erkennbar, die auch in einem Bereich einer Materialschwächung des Federgehäuses 1 vorgesehen sein kann. Es ist möglich, die Wandung des Federgehäuses 1 im Bereich der Sicke 29 mit einer Vertiefung in Form eines Sacklochs zu versehen, das durch Bohren oder Fräsen herstellbar ist. Auch bei dem Formungsvorgang des Gehäuses kann eine Vertiefung vorgesehen werden, die zu einer Materialschwächung der Wandung des Federgehäuses 1 führt, so daß die Position zur Einbringung der Sicke 29 leicht erkennbar ist. Es sei jedoch ausdrücklich darauf hingewiesen, daß die Sicke 29 auch ohne eine derartige Materialschwächung einbringbar ist.

In den Figuren 4 und 5 ist das Federscharnier gemäß Figur 2 und 3 in zwei verschiedenen Funktionsstellungen wiedergegeben. Figur 4 zeigt das Federscharnier 1 in einer überdehnten Stellung, das heißt, der Bügel ist gegenüber dem Mittelteil 35 über die Tragestellung hinaus geöffnet worden. Dadurch, daß sich das Mittelteil 35 an der Stirnseite 37 des Federscharniers 1 abstützt, wird das Schieberteil 7 gegen die Kraft der Schraubenfeder 11 gegenüber dem Federgehäuse 3 des Federscharniers 1 verlagert, wobei der Federführungsbolzen 9 aus der Ausnehmung 5 herausgezogen wird. Es ist auch hier noch einmal deutlich zu erkennen, daß der als Sperr-Ring 13 ausgebildete Sperrkörper durch die Sicke 29 festgehalten wird und sich nicht in axialer Richtung verschiebt.

Da die Schraubenfeder 11 den Stützring 15 mit einer Druckkraft beaufschlagt, wird der Federführungsbolzen 9 in das Innere der Ausnehmung 5 hineingezogen, so daß das Federscharnier 1 und der daran befestigte Bügel in die in Figur 2 dargestellte Position zurückgedrängt und gegebenenfalls auch über diese Lage hinaus verschwenkt wird. Damit wird der Bügel gegen den Kopf des Trägers der Brille angedrückt.

In Figur 5 ist das Federscharnier 1 über die in Figur 2 dargestellte Position hinaus in Richtung des Mittelteils 35 verschwenkt, also in die Ruheposition des Bügels. Das Mittelteilscharnier 31 ist mit einer derartigen Kontur versehen, daß eine Anschlagnase 39 in dieser Position gegen eine Widerlagerfläche 41 des Federgehäuses 3 anliegt. Die Widerlagerfläche 41 ist auch in Figur 3 angedeutet.

Dadurch, daß sich die Anschlagnase 39 an der Widerlagerfläche 41 abstützt, wird auch hier der Federführungsbolzen 9 gegen die Kraft der Schraubenfeder 11 aus der Ausnehmung 5 herausgezogen, wobei sich die auf den Stützring 15 wirkende Federkraft verstärkt und eine Rückstellkraft verursacht. Es wird wiederum deutlich, daß der als Sperr-Ring 13 ausgebildete Sperrkörper im Inneren der Ausnehmung gegen eine Verlagerung gesichert und gehalten wird.

Das Federscharnier 1 zeichnet sich dadurch aus, daß das Federgehäuse 3 in einem Pulver-Spritzguß-Verfahren (PIM-Verfahren, Powder-Injection-Molding-Verfahren) hergestellt ist. Bei diesem Verfahren wird ein geeignetes Metallpulver mit einem pulverförmigen Binder gemischt. Vorzugsweise wird auf eine homogene Vermischung der beiden Grundsubstanzen besonderen Wert gelegt.

Das Metallpulver-Binder-Gemisch wird in einer geeigneten Spritzgießmaschine, ähnlich einem Kunststoffspritzguß-Verfahren, -vorzugsweise erwärmt und unter Druck- in eine Gußform eingebracht, deren Kontur der Kontur des Federgehäuses 3 des Federscharniers 1 entspricht. Die Gußform ist mit einem Dorn versehen, der so angeordnet ist, daß er die Ausnehmung 5 des Federgehäuses 3 bildet. Bei diesem Spritzgußvorgang entsteht eine erste Vorform des Federgehäuses 1, der sogenannte Grünling.

Nach dem Spritzgußvorgang wird die erste Vorform aus der Gußform entnommen und der Dorn herausgezogen, so daß die Ausnehmung 5 gebildet wird. Die Ausnehmung 5 braucht also nicht in einem spanabhebenden Verfahren hergestellt zu werden, was die Herstellungskosten für das Federgehäuse 1 wesentlich reduziert. Die Ausnehmung ist sehr maßgenau und besonders glatt, insbesondere bedarf es keiner in die Innenwand der Ausnehmung eingebrachter Verriegelungsausnehmungen, um den Sperrkörper zu verankern. Die Innenwand beziehungsweise -fläche ist also kontinuierlich durchgehend ausgebildet. Besonders vorteilhaft ist es, daß das Äußere des Federscharniers 1 zylindrisch ausgebildet sein kann, ohne daß es zusätzlicher Bearbeitungs- oder Herstellungsschritte bedarf. Dadurch ergibt sich ein ästhetisch besonders ansprechendes Federscharnier.

Die erste Vorform wird zur Erzeugung einer zweiten Vorform erwärmt, wodurch der Binder aus der ersten Vorform ausgetrieben wird. Die zweite Vorform wird auch als Braunling bezeichnet.

In einem weiteren Schritt wird die erste Vorform gesintert, wobei ein üblicher Sinterofen einsetzbar ist.

In diesem Verfahrensschritt entsteht das fertige Federscharnier 1. Es kann nun bei Bedarf noch eine Oberflächenvergütung durchgeführt werden, was aber -und das ist ein großer Vorteil des Verfahrens- in der Regel nicht erforderlich ist.

Besonders vorteilhaft ist noch, daß eine freie Wahl der Metallpulver besteht. Insbesondere kann auch ein Titanpulver bei der Herstellung des Federgehäuses 3 eingesetzt werden.

## Patentansprüche

1. Federscharnier für ein Mittelteil und zwei mit diesem gelenkig verbundene Bügel aufweisende Brillen, mit einem dem Brillenbügel zugeordneten Federgehäuse und einem mit dem Federgehäuse zusammenwirkenden Scharnierteil, an dem das Mittelteil befestigbar ist, **dadurch gekennzeichnet**, daß das Federgehäuse (3) im Pulver-Spritzguß-Verfahren (PIM-Verfahren, Powder-Injection-Molding-Verfahren) hergestellt ist und eine sich in Längsrichtung des Federgehäuses (3) erstreckende Ausnehmung (5) aufweist, die durch einen während des Pulver-Spritzguß-Verfahrens eingesetzten Dorn gebildet wird, der nach dem Gußvorgang herausgezogen wird, daß die Ausnehmung (5) einen vorzugsweise als einen Federführungsbolzen (9) umgebender Sperr-Ring (13) ausgebildeten Sperrkörper aufnimmt, und daß der Sperr-Ring (13) eine in seine Umfangsfläche (25) eingebrachte Ringnut (27) aufweist, daß das Federgehäuse (3) im Bereich der Ringnut (27) des Sperr-Rings (13) eindrückbar ist, so daß der Sperr-Ring (13) in der Ausnehmung (5) festgehalten wird und gegen eine axiale Verschiebung innerhalb der Ausnehmung (5) gesichert ist, und daß das Federgehäuse (3) in dem eindrückbaren Bereich eine Zone reduzierter Wandstärke aufweist.

2. Federscharnier nach Anspruch 1, **dadurch gekennzeichnet**, daß der Dorn eine zylindrische Außenfläche aufweist.

3. Federscharnier nach Anspruch 2, **dadurch gekennzeichnet**, daß der Dorn eine kreiszylindrische Außenfläche aufweist.

4. Federscharnier nach einem der vorhergehenden Ansprüche, **dadurch gekennzeichnet**, daß die Ausnehmung (5) der -zumindest teilweisen- Aufnahme eines mit einem Bügel koppelbaren Schieberteils (7) dient.

5. Federscharnier nach einem der vorhergehenden Ansprüche, **dadurch gekennzeichnet**, daß der Federführungsbolzen (9) mit einem elastischen Element zusammenwirkt.

6. Federscharnier nach Anspruch 5, **dadurch gekennzeichnet**, daß das elastische Element als Druckfeder ausgebildet ist.

7. Federscharnier nach Anspruch 6, **dadurch gekennzeichnet**, daß die Druckfeder als Schraubenfeder (11) ausgebildet ist, durch deren Innenraum der Federführungsbolzen (9) geführt ist.

8. Federscharnier nach einem der vorhergehenden Ansprüche, **dadurch gekennzeichnet**, daß der Sperr-Ring (13) eine erste Stützfläche für das elastische Element bildet.

9. Federscharnier nach Anspruch 8, **dadurch gekennzeichnet**, daß der Federführungsbolzen (9) eine zweite Stützfläche für das elastische Element aufweist.

10. Federscharnier nach einem der vorhergehenden Ansprüche, **dadurch gekennzeichnet,** daß die Zone reduzierter Wandstärke durch eine Sackloch-Bohrung oder Sackloch-Fräsung hergestellt ist.

11. Federscharnier nach einem der vorhergehenden Ansprüche, **dadurch gekennzeichnet**, daß die Zone reduzierter Wandstärke bei der Herstellung des Federgehäuses (3) eingeformt ist.

12. Verfahren zur Herstellung eines Federscharniers nach einem der vorhergehenden Ansprüchen 1 bis 11, **dadurch gekennzeichnet**, daß ein Metallpulver-Binder-Gemisch zur Herstellung einer ersten Vorform des Federscharniers in einem Spritzgußverfahren in eine Gußform eingebracht wird, deren Kontur der Kontur eines Federgehäuses des Federscharniers entspricht, und ein Dorn so angeordnet wird, daß er eine Ausnehmung im Federgehäuse bildet.

13. Verfahren nach Anspruch 12, **dadurch gekennzeichnet**, daß nach Einbringung des Metallpulver-Binder-Gemisches in die Gußform der Dorn herausgezogen und das Federscharnier aus der Gußform entformt wird.

14. Verfahren nach einem der vorhergehenden Ansprüche 12 oder 13, **dadurch gekennzeichnet**, daß die erste Vorform zur Erzeugung einer zweiten Vorform erwärmt wird, wobei der Binder aus der ersten Vorform entfernt wird.

15. Verfahren nach einem der vorhergehenden Ansprüche 12 bis 14, **dadurch gekennzeichnet,** daß die zweite Vorform in einem Sinterverfahren erwärmt wird.

## Claims

1. A spring hinge for spectacles comprising a central part and two bows connected thereto in an articulated manner, with a spring casing associated with the spectacle bow and a hinge part which cooperates with the spring casing and to which the central part can be secured, **characterized in that** the spring casing (3) is produced in the powder-injection-moulding process (PIM process) and is provided with a recess (5) which extends in the longitudinal direction of the spring casing (3) and is formed by a mandrel inserted during the powder-injection-moulding process and withdrawn after the moulding process, the recess (5) receives a locking member which is preferably constructed in the form of a locking ring (13) surrounding a spring-guiding pin (9), and the locking ring (13) is provided with an annular groove (27) formed in its peripheral face (25), the spring casing (3) can be pressed in in the region of the annular groove (27) of the locking ring (13) so that the locking ring (13) is held firmly in the recess (5) and is prevented from being displaced axially inside the recess (5), and the spring casing (3) has a zone of reduced wall thickness in the region which can be pressed in.

2. A spring hinge according to Claim 1, **characterized in that** the mandrel is provided with a cylindrical outer face.

3. A spring hinge according to Claim 2, **characterized in that** the mandrel is provided with a circular cylindrical outer face.

4. A spring hinge according to one of the preceding Claims, **characterized in that** the recess (5) is used for receiving - at least in part - a slide part (7) which can be coupled to a bow.

5. A spring hinge according to one of the preceding Claims, **characterized in that** the spring-guiding pin (9) cooperates with a resilient member.

6. A spring hinge according to Claim 5, **characterized in that** the resilient member is constructed in the form of a compression spring.

7. A spring hinge according to Claim 6, **characterized in that** the compression spring is constructed in the form of a helical spring (11), through the interior of which the spring-guiding pin (9) passes.

8. A spring hinge according to one of the preceding Claims, **characterized in that** the locking ring (13) forms a first support face for the resilient member.

9. A spring hinge according to Claim 8, **characterized in that** the spring-guiding pin (9) is provided with a second support face for the resilient member.

10. A spring hinge according to one of the preceding Claims, **characterized in that** the zone of reduced wall thickness is produced by a blind bore or blind milled portion.

11. A spring hinge according to one of the preceding Claims, **characterized in that** the zone of reduced wall thickness is formed during the production of the spring casing (3).

12. A method of producing a spring hinge according to one of the preceding Claims 1 to 11, **characterized in that**, in order to produce a first preliminary mould of the spring hinge in an injection-moulding process, a metallic-powder/binder mixture is introduced into a casting mould, the outline of which corresponds to the outline of a spring casing of the spring hinge, and a mandrel is arranged in such a way that it forms a recess in the spring casing.

13. A method according to Claim 12, **characterized in that** after the metallic-powder/binder mixture has been introduced into the casting mould the mandrel is withdrawn and the spring hinge is removed from the casting mould.

14. A method according to one of the preceding Claims 12 or 13, **characterized in that** the first preliminary mould is heated in order to produce a second preliminary mould, wherein the binder is removed from the first preliminary mould.

15. A method according to one of the preceding Claims 12 to 14, **characterized in that** the second preliminary mould is heated in a sintering process.

## Revendications

1. Charnière à ressort pour lunettes comprenant une partie centrale et deux branches reliées à cette dernière de manière articulée, comportant un boîtier de ressort affecté à la branche de lunettes, et une pièce d'articulation qui coopère avec ledit boîtier de ressort, et à laquelle la partie centrale peut être fixée, caractérisée par le fait que le boîtier (3) de ressort est produit selon le procédé de moulage par injection de poudre (procédé PIM, procédé Powder-Injection-Molding), et présente un évidement (5) qui s'étend dans la direction longitudinale du boîtier (3) de ressort et est formé par un poinçon inséré au cours du procédé de moulage par injection de poudre, puis extrait après le processus de coulée ; par le fait que l'évidement (5) reçoit un corps de blocage réalisé, de préférence, sous la forme d'un anneau de blocage (13) ceinturant une broche (9) de guidage du ressort ; par le fait que l'anneau de blocage (13) comporte une saignée annulaire (27) pratiquée dans sa surface périphérique (25) ; par le fait que le boîtier (3) de ressort peut être empreint dans la région de la saignée annulaire (27) de l'anneau de blocage (13), de telle sorte que ledit anneau de blocage (13) soit verrouillé à demeure dans l'évidement (5) et soit empêché de coulisser axialement à l'intérieur dudit évidement (5) ; et par le fait que le boîtier (3) de ressort présente une zone d'épaisseur de paroi réduite dans la région pouvant être empreinte.

2. Charnière à ressort selon la revendication 1, caractérisée par le fait que le poinçon présente une surface extérieure cylindrique.

3. Charnière à ressort selon la revendication 2, caractérisée par le fait que le poinçon présente une surface extérieure cylindrique droite.

4. Charnière à ressort selon l'une des revendications précédentes, caractérisée par le fait que l'évidement (5) sert à recevoir - au moins partiellement - une pièce coulissante (7) pouvant être accouplée à une branche.

5. Charnière à ressort selon l'une des revendications précédentes, caractérisée par le fait que la broche (9) de guidage du ressort coopère avec un élément élastique.

6. Charnière à ressort selon la revendication 5, caractérisée par le fait que l'élément élastique est réalisé sous la forme d'un ressort de pression.

7. Charnière à ressort selon la revendication 6, caractérisée par le fait que le ressort de pression est réalisé sous la forme d'un ressort hélicoïdal (11), par l'espace intérieur duquel la broche (9) de guidage du ressort est guidée.

8. Charnière à ressort selon l'une des revendications précédentes, caractérisée par le fait que l'anneau de blocage (13) forme une première surface d'appui destinée à l'élément élastique.

9. Charnière à ressort selon la revendication 8, caractérisée par le fait que la broche (9) de guidage du ressort comporte une seconde surface d'appui destinée à l'élément élastique.

10. Charnière à ressort selon l'une des revendications précédentes, caractérisée par le fait que la zone d'épaisseur de paroi réduite est produite par un perçage borgne ou par un fraisage borgne.

11. Charnière à ressort selon l'une des revendications précédentes, caractérisée par le fait que la zone d'épaisseur de paroi réduite est moulée en creux au stade de la production du boîtier (3) de ressort.

12. Procédé de fabrication d'une charnière à ressort selon l'une des revendications précédentes 1 à 11, caractérisé par le fait qu'un mélange liant-poudre métallique est déversé, en vue de produire une première préforme de la charnière à ressort par un procédé de moulage par injection, dans un moule de coulée dont la configuration correspond à la configuration d'un boîtier de ressort de la charnière à ressort, et un poinçon est disposé de façon telle qu'il forme un évidement dans le boîtier de ressort.

13. Procédé selon la revendication 12, caractérisé par le fait que, après le déversement du mélange liant-poudre métallique dans le moule de coulée, le poinçon est extrait et la charnière à ressort est démoulée dudit moule de coulée.

14. Procédé selon l'une des revendications précédentes 12 ou 13, caractérisé par le fait que la première préforme est chauffée en vue de produire une seconde préforme, le liant étant éliminé de la première préforme.

15. Procédé selon l'une des revendications précédentes 12 à 14, caractérisé par le fait que la seconde préforme est chauffée par un procédé de frittage.
